# DEMANDE DE BREVET EUROPEEN

(11) **EP 1 326 474 A2**
(43) Date de publication de la demande: **09.07.2003**
(21) Numéro de dépôt: 02293234.7
(22) Date de dépôt: 24.12.2002
(51) Int. Cl.: H04Q 11/00

(54) **Dispositif et procédé de commutation de données optiques pour réseaux de communication optiques**

(30) Priorité: 03.01.2002 FR 0200042
(71) Demandeur: ALCATEL, 75008 Paris (FR)
(72) Inventeur: Le Sauze, Nicolas, 91440 Bures-sur-Yvette (FR); Chiaroni, Dominique, 92160 Antony (FR); Penninckx, Denis, 91620 Nozay (FR)
(74) Mandataire: Sciaux, Edmond

(57) **Abrégé**

L'invention s'inscrit dans le cadre d'une commutation de signaux optiques avec capacité de conversion de longueur d'onde de porteuse desdits signaux, comprenant un ensemble de ports d'entrée (PEl-PEn), un ensemble de ports de sortie (PS1-RSn) fonctionnellement reliés aux ports d'entrée de manière qu'un signal d'entrée présenté sur l'un des ports d'entrée puisse être aiguillé sélectivement vers au moins l'un des ports de sortie, des moyens (34) de conversion de longueur d'onde permettant de disposer d'une capacité de conversion de longueur d'onde de porteuse d'un signal en entrée vers au moins une autre longueur d'onde en sortie de port de sortie.

Conformément à l'invention, on prévoit que les moyens de conversion (34) soient limités dans la capacité de conversion de longueur d'onde par au moins l'un des trois moyens de limitation i) à iii) :
i) avec l'un au moins desdits ports de sortie (PS), aucune conversion de longueur ne peut intervenir pour l'émission d'un signal d'un port d'entrée ;
ii) avec l'un au moins desdits ports de sortie (PS), la conversion peut intervenir pour l'émission d'un signal d'un port d'entrée (PE), mais avec conversion de longueur d'onde porteuse possible seulement vers un nombre restreint de valeurs de longueur d'onde parmi le nombre L de valeurs de longueurs d'onde acceptées en entrée, ce nombre restreint étant supérieur à 0 et inférieur à L, et
iii) avec un nombre restreint X2 seulement de ports de sortie (PS) inférieur au nombre total de ports de sortie du dispositif de commutation, la conversion peut intervenir pour faire émettre un signal d'un port d'entrée (PE) avec conversion de longueur d'onde possible vers toute valeur de longueur d'onde parmi le nombre L de valeurs de longueurs d'onde distinctes acceptées en entrée.

## Description

L'invention concerne la transmission de données dans des réseaux de communication optiques. Elle s'adresse plus particulièrement aux architectures de matrices de commutation qui, au sein des noeuds du réseau, sont prévues pour aiguiller les données sur différents liens et périphériques du réseau. Ces matrices doivent pouvoir réaliser, au besoin, des conversions de longueur d'onde λ de la porteuse des données commutées, notamment pour les multiplexer et/ou résoudre des problèmes de contention dans leur transport sur une même fibre. Les données peuvent se présenter sous forme de paquets à multiplexage à répartition temporelle ou à multiplexage à répartition sur longueurs d'onde, ou éventuellement sous forme de flot continu de bout en bout selon un mode circuit.

On rappelle qu'une matrice de commutation a pour fonction de recueillir et réémettre des données au moyen respectivement d'un ensemble de ports d'entrée et d'un ensemble de ports de sortie. Entre les ports d'entrée et de sortie, les données peuvent subir une conversion de longueur d'onde porteuse ou un retard prédéterminé pour assurer la poursuite sans heurt de leur trajet dans le réseau. A cette fin, les matrices de commutation sont équipées :
- de multiplexeurs qui permettent de faire converger vers une même fibre différentes voies de données séparées,
- de démultiplexeurs qui permettent, à l'inverse, d'extraire les différentes voies d'un ensemble multiplexé sur des fibres respectives, si la matrice gère des données à multiplexage par répartition en longueurs d'onde,
- de convertisseurs de longueur d'onde, lesquels ont généralement la fonction supplémentaire d'amplifier un signal optique, et
- le cas échéant, des lignes à retard qui agissent en tant que tampon pour permettre de séparer des flots de données dans le temps, notamment pour résoudre des problèmes de contention.

Avec l'accroissement sans cesse du trafic de données sur les réseaux optiques, il devient nécessaire d'assurer des débits de plus en plus importants au niveau des matrices de commutation de données optiques, ce qui impose des architectures de noeud complexes et coûteuses en raison du volume d'équipement que cela implique.

Typiquement, la structure des matrices de commutation de paquets optiques repose sur une totale flexibilité de conversion de longueur d'onde porteuse sur tous les ports d'entrée: chaque signal en entrée peut ainsi être envoyé vers n'importe quel port de sortie, et ce sur n'importe quelle longueur d'onde porteuse acceptée par le réseau, grâce à des convertisseurs de longueur d'onde associés aux ports de sortie.

Cette approche, basée sur une capacité totale de conversion de longueurs d'onde, rend les architectures particulièrement complexes, car elle implique une démultiplication de moyens afin d'assurer que chaque longueur d'onde en entrée puisse être retransmise sur toutes les longueurs d'onde possibles de chaque port de sortie. Il en résulte des pertes optiques importantes et la nécessité d'un grande nombre de composants, même pour les architectures qui fonctionnent dans les domaine des longueurs d'onde, soit en multiplexage à répartition sur longueurs d'onde, connu par l'acronyme anglais WDM de "wavelength division multiplexing", justement dans le but de réduire le nombre de composants actifs.

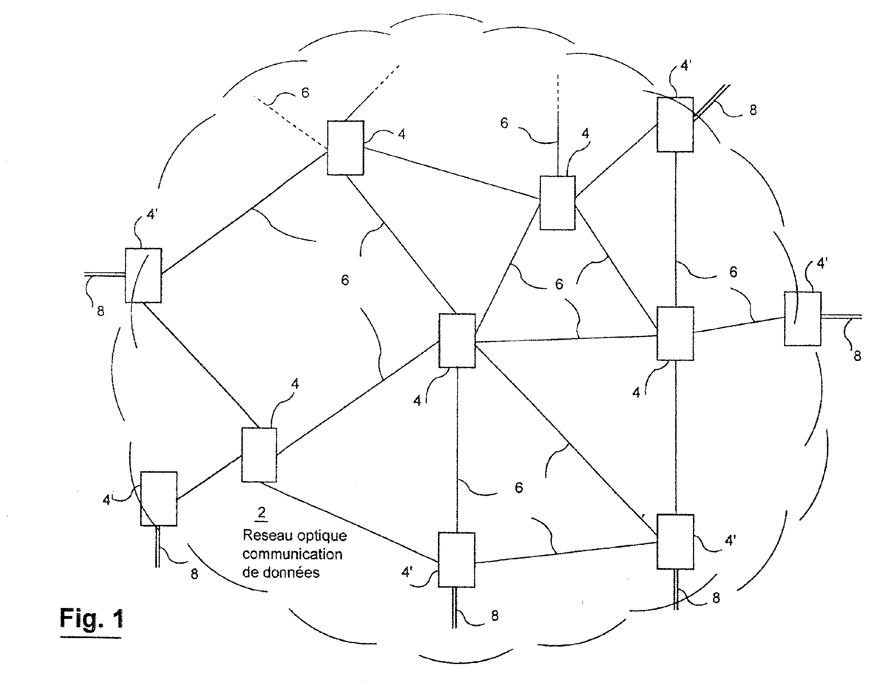

La figure 1 est un schéma illustrant le principe d'un réseau optique de communication de données 2, composé d'un ensemble de noeuds dont certains 4 fonctionnent uniquement à l'intérieur du réseau et d'autres 4', reliés à ces derniers, se situent à la périphérie du réseau pour établir des branchements avec l'extérieur, par exemple avec une passerelle. Chacun de noeuds 4 ou 4' comprend au moins une matrice de commutation dont les ports sont reliés à des liens 6 internes au réseau 2, ainsi qu'à des lignes 8 de branchement sur le réseau en ce qui concerne les noeuds périphériques 4'. Les liens 6 et lignes de branchement 8 sont constitués par des fibres optiques qui, dans l'exemple considéré, permettent de véhiculer simultanément plusieurs paquets de données sur un brin par multiplexage WDM.

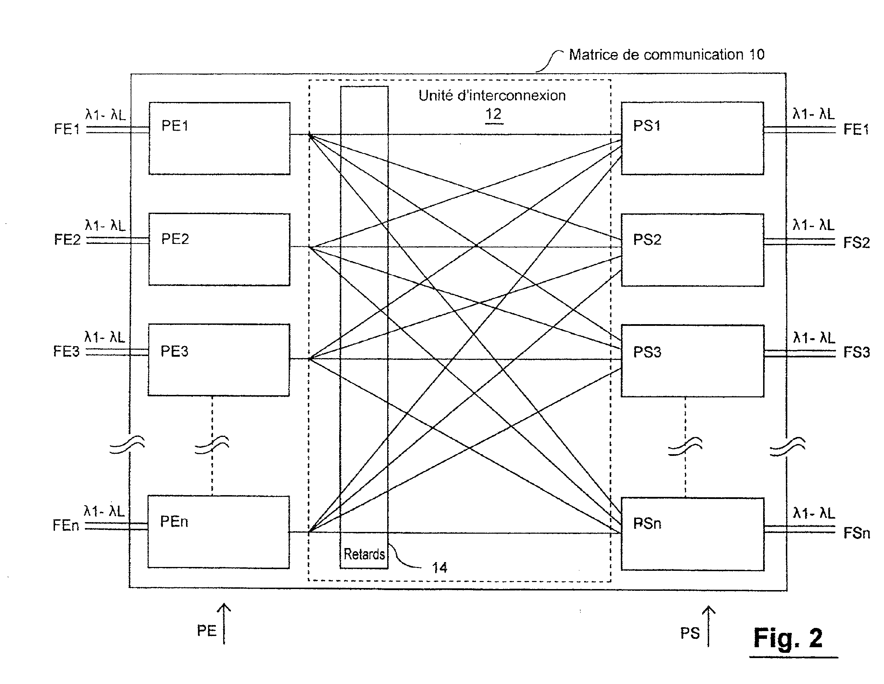

La figure 2 représente de manière très simplifiée un exemple d'architecture classique d'une matrice de commutation 10 d'un noeud 4 ou 4' du réseau 2. Dans l'exemple, il s'agit d'une matrice dite "n x n", c'est-à-dire composée d'un nombre n de ports d'entrée PE1 à PEn (désignation générique PE) et d'un même nombre n de ports de sortie PS1 à PSn (désignation générique PS).

Chaque port d'entrée est relié à un câble de fibres optiques d'entrée, respectivement FE1 à FEn et, de même, chaque port de sortie est relié à un câble de fibres optiques de sortie FS1 à FSn. Chaque câble de fibres optiques d'entrée et de sortie peut véhiculer un nombre L de différentes longueurs d'onde porteuses λ1 à λL, leurs ports respectifs étant adaptés pour opérer en multiplexage et/ou en démultiplexage sur l'ensemble de ces L longueurs d'onde.

Une unité d'interconnexion 12 est interposée entre les ports d'entrée PE et de sortie PS de manière à ce que chaque longueur d'onde de chaque port d'entrée puisse être reliée à l'ensemble des L longueurs d'onde des n ports de sortie, comme le représente symboliquement les lignes croisées au sein de cette unité.

Par ailleurs, une unité de retard 14 est prévue pour permettre d'imposer une valeur de retard sélectionnée sur les lignes reliant les ports d'entrée et de sortie de l'unité de d'interconnexion 12. Ces retards permettent notamment de régler des contentions lorsque plusieurs voies de données veulent accéder au même moment à une même longueur d'onde sur un même port de sortie.

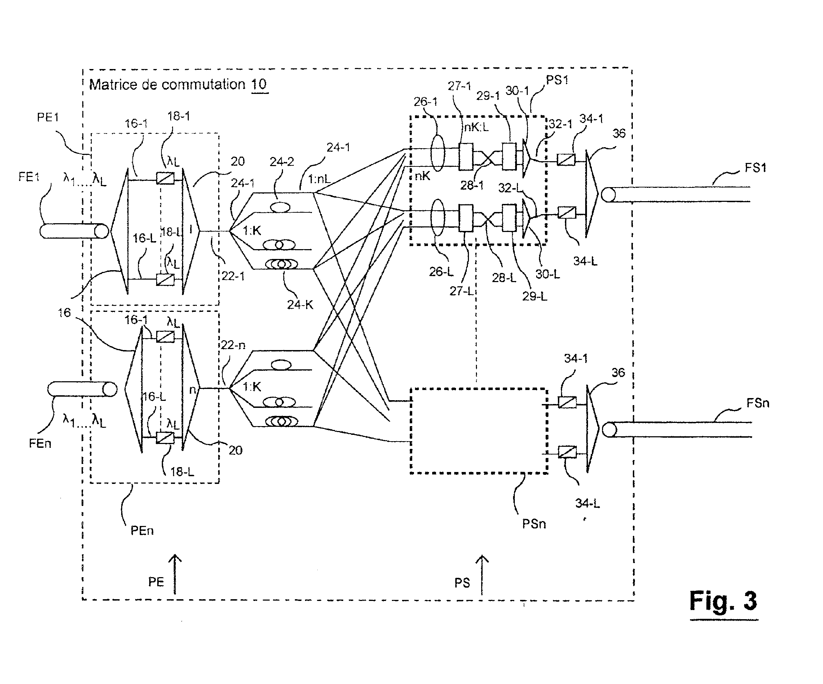

La figure 3 représente de manière plus détaillée une partie de la matrice de la figure 2 au niveau des ports d'entré PE1 et PEn et des ports de sortie PS1 et PSn, ainsi que de quelques-unes des interconnexions entre ces ports. On comprendra que tous les ports d'entrée PE1 à PEn ont une architecture interne sensiblement identique, de même pour chacun des ports de sortie PS1 à PSn. L'ensemble des différentes interconnexions entre ces ports peut par ailleurs être déduit par simple extrapolation.

Chaque port d'entrée PE présente, en entrée de fibre optique FE, un démultiplexeur, 16 à L voies de sortie, 16-1 à 16-L (désignation générique 16), chacune de ces voies présentant isolément tout signal modulé présent sur la fibre d'entrée FE. Sur chacune de ces voies 16-1 à 16-L est placé un premier convertisseur de longueur d'onde, respectivement 18-1 à 18-L (désignation générique 18), qui permet de sortir les données qui lui sont présentées en sortie du démultiplexeur 16 à une longueur d'onde λ1 à λL qui lui est propre. Les convertisseurs sont généralement réalisés à base de dispositifs d'amplification optique à semiconducteur, connus et désignés ci-après par leur acronyme anglo-saxon SOA (de "semiconductor optical amplifier"), et possède aussi par conséquent des propriétés d'amplification voire de régénération.

La sortie de chaque premier convertisseur 18 est présentée à une entrée respective d'un premier multiplexeur 20 à L entrées permettant de regrouper, sur une même voie de sortie 22, l'ensemble des sorties des convertisseurs 18-1 à 18-L. Pour l'ensemble des n ports d'entrée PE1 à PEn, les n premiers multiplexeurs 20 correspondants présentent autant de voies de sortie 22-1 à 22-n respectives (désignation générique 22). L'ensemble décrit permet donc, pour chaque port d'entrée PE1 à PEn, de présenter en sortie les signaux présents sur les fibres d'entrée FE1 à FEn, convertis sur les longueurs porteuses internes (λ1 à λL). Pour chaque port d'entrée, l'ensemble constitué par le démultiplexeur 16, le convertisseur 18 et le premier multiplexeur 20 forme un étage de conversion et d'amplification d'entrée.

La sortie 22 de chaque premier multiplexeur 20, qui constitue une voie unique, est présentée à une entrée respective d'un nombre K de lignes à retard optiques 24-1 à 24-K (désignation générique 24) de l'unité de retard 14. (Dans le schéma, la configuration prévoit K lignes à retard propres à chaque sortie 22 de premier multiplexeur, bien que dans la pratique ces lignes puissent être partagées, si les longueurs d'onde venant des différents multiplexeurs d'entrée sont différentes.) Chacune des lignes de retard d'un ensemble 24-1 à 24-K impose une quantité de retard qui lui est spécifique. Dans l'exemple, la gamme de retards commence par la valeur nulle (zéro retard), matérialisée par une connexion directe à la ligne 24-1. La relation entre les différents retards suit typiquement une progression linéaire, par exemple le plus faible retard non nul imposé (ligne 24-2) aura une valeur τ, les lignes suivantes de la progression imposant respectivement un de retard τ, 2τ, 3τ, ... . En général, la valeur τ est égale à la taille (occupation temporelle) fixe du paquet.

Les k sorties des lignes à retard de chaque port d'entrée constituent des sorties tampon, permettant une répartition temporelle de données arrivant en simultané, et notamment de les concaténer.

Chaque port de sortie PS1 à PSn comprend L groupes d'entrées 26-1 à 26-L (désignation générique 26), chaque groupe ayant un nombre n*K d'entrées individuelles reliées pour recevoir une sortie respective des K lignes à retard pour chacun des n ports d'entrée PE. Chaque groupe de n*K entrées 26-1 à 26-L est reçu par un premier bloc de sélection 27-1à 27-L, permettant la sélection d'un port d'entrée PE parmi les n, avec un retard k (compris entre 1 et K) Les données sélectionnées par ces blocs de sélection 27-1 à 27-L sont ensuite diffusées par un ensemble coupleur optique étoile respectif 28-1 à 28-L (désignation générique 28) à L sorties. Dans chaque ensemble, chacune des L sorties est connectée à un deuxième bloc de sélection 29 avec L entrées et L sorties. Ces L sorties sont reliées à un deuxième multiplexeur respectif 30-1 à 30-L (désignation générique 30).

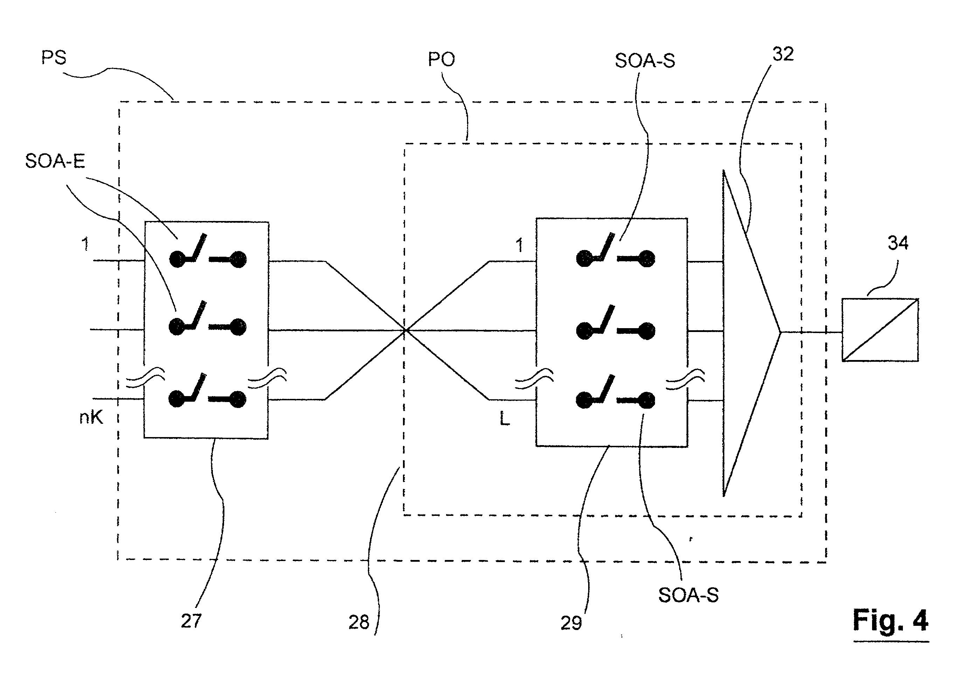

La figure 4 représente de manière plus détaillée la chaîne constituée d'un premier bloc de sélection 27, d'un ensemble coupleur optique étoile 28 et d'un deuxième bloc de sélection 29.

Le premier étage de sélection 27 comporte un SOA propre à chacune des n*K entrées, soit n*K SOA d'entrée (SOA-E) au total. Chacun de ces derniers est utilisé en tant que porte optique pour la sélection d'une ligne d'entrée. En fonctionnement, un SOA-E sélectionné est mis en position "allumée" (interrupteur fermé) pour lancer les données passées, les n*K-1 autres SOA-E étant en position "éteinte" (interrupteur ouvert) pour bloquer les données sur leur voies respectives.

De même, le deuxième bloc de sélection 29 comporte un SOA propre chacune des L sorties, soit L SOA de sortie (SOA-S) au total. Chacun de ces derniers est utilisé en tant que porte optique PO pour la sélection d'une longueur d'onde en association avec l'entrée du multiplexeur 30. En fonctionnement, un SOA-S sélectionné est mis en position "allumée" (interrupteur fermé) pour lancer les données passées, les L-1 autres SOA-S étant en position "éteinte" (interrupteur ouvert) pour bloquer les données sur leurs voies respectives.

L'association d'un SOA-S i du bloc de sélection 29 avec l'entrée i du multiplexeur 30 (i étant un nombre de 1 à L) permet la sélection de la longueur i parmi l'ensemble des données sélectionnées par le premier bloc de sélection. Un tel multiplexeur est prévu pour chaque groupe d'entrées 26-1 à 26-L.

Le fonctionnement d'une sélection avec la chaîne de la figure 4 se déroule en deux étapes, partant du fait que chaque ligne d'entrée reçoit l'ensemble (L longueurs d'onde) des données provenant d'un port d'entrée (1 à n) et ayant un retard (1 à K), donnant n*K lignes d'entrée par ligne de sortie (une longueur d'onde sur un port de sortie) :
- une première étape dans laquelle, parmi ces n*K entrées, on n'en sélectionne au moyen des SOA-E du premier bloc de sélection 27 qu'une à un instant donné, par activation (interrupteur fermé) du SOA-E correspondant. Ce bloc 27 constitue ainsi un premier étage de sélection. L'ensemble (L longueurs d'onde) des données venant de le port d'entrée (désigné PEj) avec le retard (désigné pK) est alors diffusé par le coupleur étoile n*K:L 28 vers les L SOA-E du deuxième bloc de sélection 29 ; et
- une deuxième étape pour sélectionner la longueur d'onde λi au niveau de deuxième bloc de sélection 29, qui constitue le deuxième étage de sélection. On active (interrupteur fermé) le SOA-S correspondant à longueur d'onde λi, de sorte que l'ensemble des données (L longueurs d'onde) est envoyé vers port i du multiplexeur. On obtient donc uniquement en sortie les données provenant de la longueur λi du port d'entrée PEj ayant subi dans la matrice le retard pK.

La sortie (respectivement 32-1 à 32-L) de chacun des L deuxième multiplexeurs 30 est reliée à un deuxième convertisseur de longueur d'onde respectif 34-1 à 34-L (désignation générique 34) avant d'attaquer la fibre de sortie FS du port. Ces deuxièmes convertisseurs 34 permettent de convertir les données qui lui sont présentées en entrée sur l'une quelconque des L différentes longueurs d'onde λ1 à λL vers les longueurs associés à chaque groupe. On note que ces deuxième convertisseurs servent aussi en tant que régénérateurs : ils réalisent en plus de cette fonction de conversion de longueur d'onde, une régénération à chaque sortie des matrices de commutation de paquets optiques afin également de retrouver la qualité des signaux optiques et de permettre la mise en cascade de plusieurs matrices de commutation.

La sortie de chacun des L deuxième convertisseur 34 est présentée à une entrée respective d'un troisième multiplexeur 36 à L voies d'entré et une voie de sortie, cette dernière étant reliée à la fibre de sortie FS du port. Ainsi, tout port de sortie peut émettre sur sa fibre de sortie FS toute donnée reçue sur les différentes entrées des ports d'entrée PE1 à PEn, et ce sur n'importe laquelle des longueurs d'onde λ1 à λL, avec résolution de contentions éventuelles par adaptation de la longueur d'onde de porteuse (résolution spectrale) ou par imposition de retard (résolution temporelle).

De cette manière, il est possible de faire face au problème de contention par deux solutions : soit de les traiter sur le domaine spectral (par conversion de longueur d'onde), soit de les traiter dans le domaine temporel (par imposition de retard).

Dans ce qui suit, on désigne par le terme "port interne" toute entrée ou sortie interne de la matrice de commutation.

Avec une telle architecture, le nombre de ports internes, comprenant des amplificateurs optiques à semiconducteur SOA-E (premier bloc de sélection 27) et SOA-S (deuxième bloc de sélection 29), est très important, même en fonctionnement en mode de multiplexage à répartition en longueurs d'onde. En effet, il est nécessaire de prévoir nK+L ports internes pour chaque longueur d'onde de sortie, ce qui implique au total nL^{*}(nK+L) amplificateurs optiques à semiconducteur. Cette solution classique implique donc une conversion dite complète. Qui plus est, en raison des pertes optiques considérables dans les répartiteurs optiques de la matrice et de la cascade d'amplificateurs optiques à semiconducteur, les dégradations des signaux optiques de la matrice imposent la présence d'interfaces de régénération, soit les éléments démultiplexeur 16/convertisseur 18 et multiplexeur 18 précités.

Au vu de ce qui précède, l'invention propose des architectures de noeud simplifiées basées sur une utilisation seulement partielle de la conversion/régéneration de longueur d'onde, afin d'assouplir les contraintes de volume matériel des matrices de commutation optiques.

Il a en effet été découvert par la demanderesse qu'une gestion adéquate des flux de données, même importants, peut s'effectuer avec une résolution correcte des contentions potentielles sans pour autant prévoir une capacité complète de conversion de longueur d'onde sur tous les ports, comme l'exige les architectures classiques de matrices de commutation, dont la figure 3 représente un exemple.

Plus précisément, l'invention propose, selon un premier aspect, un dispositif de commutation de signaux optiques avec capacité de conversion de longueur d'onde de porteuse, comprenant un ensemble de ports d'entrée, un ensemble de ports de sortie fonctionnellement reliés aux ports d'entrée de manière qu'un signal d'entrée présenté sur l'un des ports d'entrée puisse être aiguillé sélectivement vers au moins l'un des ports de sortie, des moyens de conversion de longueur d'onde permettant de disposer d'une capacité de conversion de longueur d'onde de porteuse d'un signal en entrée vers au moins une autre longueur d'onde en sortie de port de sortie,
caractérisé en ce que lesdits moyens de conversion sont limités dans ladite capacité de conversion de longueur d'onde par au moins l'un des trois moyens de limitation i) à iii) :
i) avec l'un au moins desdits ports de sortie, aucune conversion de longueur ne peut intervenir pour l'émission d'un signal d'un port d'entrée ;
ii) avec l'un au moins desdits ports de sortie, la conversion peut intervenir pour l'émission d'un signal d'un port d'entrée, mais avec conversion de longueur d'onde porteuse possible seulement vers un nombre restreint de valeurs de longueur d'onde parmi le nombre L de valeurs de longueurs d'onde acceptées en entrée, ce nombre restreint étant supérieur à 0 et inférieur à L, et
iii) avec un nombre restreint seulement de ports de sortie inférieur au nombre total de ports de sortie du dispositif de commutation, la conversion peut intervenir pour faire émettre un signal d'un port d'entrée avec conversion de longueur d'onde possible vers toute valeur de longueur d'onde parmi le nombre L de valeurs de longueurs d'onde distinctes acceptées en entrée.

Selon un première variante possible, les moyens de conversion sont limités dans la capacité de conversion de longueur d'onde de manière à ce que la conversion puisse intervenir pour l'émission d'un signal d'un port d'entrée par tout port de sortie, mais avec conversion de longueur d'onde porteuse possible, avec chacun des ports de sortie, seulement vers un nombre restreint x1 de valeurs de longueur d'onde parmi le nombre L de valeurs de longueurs d'onde distinctes acceptées en entrée, x1 étant supérieur à 0 et inférieur à L.

Selon une deuxième variante possible, les moyens de conversion sont limités dans la capacité de conversion de longueur d'onde de manière à ce que la conversion puisse intervenir pour l'émission d'un signal d'un port d'entrée avec conversion de longueur d'onde possible vers toute valeur de longueur d'onde parmi le nombre L de valeurs de longueur d'onde distinctes acceptées en entrée, mais seulement pour des commutations sur un nombre restreint x2 de ports de sortie, x2 étant supérieur à 0 et inférieur au nombre de ports de sortie du dispositif.

Le dispositif peut être du type apte à commuter les signaux se présentant sous forme de paquets de données optiques.

Dans le cas de la première variante, la limitation des moyens de conversion peut intervenir au niveau d'au moins un des ports de sortie, chaque port de sortie auquel intervient la limitation comportant un premier nombre d'entrées de lignes de signal en provenance des ports d'entrée, et un second nombre L de lignes de sortie, ce second nombre représentant le nombre de longueurs d'onde distinctes sur les ports de sortie PS, et en ce que parmi ce second nombre au moins une des lignes de sortie est dépourvue de moyens de conversion de longueur d'onde, ne servant qu'à l'émission en sortie d'un signal avec la même longueur d'onde que celle à laquelle ce signal est reçu en entrée.

Chaque port de sortie faisant intervenir une limitation de conversion de longueur d'onde peut comporter un bloc de sélection simplifié, permettant de regrouper sur chaque ligne de sortie sans conversion les signaux venant des lignes d'entrée ayant la même longueur d'onde que celle de la ligne de sortie, le bloc comprenant en outre, pour chaque ligne de sortie sans conversion, des moyens de sélection spatiale pour la sélection de lignes d'entrée, ces moyens de sélection étant dépourvus de moyens de sélection spectrale et couplés en sortie, par des moyens de couplage, à la ligne de sortie correspondant à la longueur d'onde du bloc de sélection spatial.

Il peut comprendre en outre des moyens de sélection temporelle pour retarder un signal d'un port d'entrée avant qu'il ne soit émis en sortie d'un port de sortie, les moyens de sélection temporelle présentant aux ports de sortie un nombre K de copies de signaux reçus sur les ports d'entrée, chaque copie étant décalée dans le temps relativement aux autres.

Chaque port de sortie faisant intervenir une limitation de conversion de longueur d'onde peut comprendre un ensemble lignes d'entrée menant vers des lignes de sortie dépourvues de moyens de conversion, l'ensemble comportant, pour un nombre n de ports d'entrée, un nombre n*K de lignes, une pour chacune desdites K copies décalées dans le temps provenant de chacun des n ports d'entrée.

Les n*K lignes de l'ensemble peuvent être présentées en entrée du bloc de sélections simplifiés, ces derniers produisant en sortie un nombre (L-x1) de lignes de sortie égal au nombre total L de valeurs de longueurs d'onde distinctes acceptées en entrée du dispositif moins ledit nombre restreint x1 de valeurs de longueur d'onde pour lesquelles une conversion de longueur d'onde porteuse est possible.

Chaque port de sortie peut alors comprendre un nombre x1 d'ensembles de lignes d'entrée, chacun menant vers une ligne respective des x1 lignes de sortie à conversion, et comprenant n*K lignes d'entrée, ledit port de sortie comportant n*K(x1+1) lignes d'entrée, chacun des x1 ensembles de lignes comprenant en outre, pour chacune des valeurs de longueur d'onde dudit nombre restreint x1 de valeurs de longueur d'onde pour lesquelles une conversion de longueur d'onde porteuse est possible :
- un étage de sélection spatiale et temporel recevant en entrée un nombre n*K de lignes d'entrée, une pour chacune desdites K copies décalées dans le temps provenant de chacun des n ports d'entrée et produisant, par l'utilisation d'un coupleur nK :L, un nombre L de sorties égal au nombre total L de valeurs de longueurs d'onde acceptées en entrée du dispositif,
- un ensemble de sélection de longueur d'onde, constitué d'un étage de sélection spatiale associé à un multiplexeur, recevant en entrée lesdites L sorties et produisant sélectivement l'une d'elles en sortie, et
- un moyen de conversion de longueur d'onde, recevant en entrée la sortie dudit multiplexeur et relié en sortie à une ligne de sortie.

Le dispositif peut comprendre en outre un multiplexeur à L entrées recevant respectivement chacune des (L-x1) de lignes de sortie des blocs de sélection simplifiés et les x1 sorties de l'ensemble des multiplexeurs, et une sortie émettant sur une fibre de sortie du port de sortie correspondant.

Il peut présenter un nombre n de ports d'entrée et un nombre n' de ports de sortie, les nombres n et n' pouvant être égaux ou différents chaque port d'entrée, comprenant un multiplex spectral comprenant un nombre L de porteuses ayant respectivement L longueurs d'onde distinctes, le dispositif comprenant en outre :
- un premier étage tampon permettant d'imposer un nombre K de copies mutuellement décalées dans le temps de chacune des n signaux optiques en entrée,
- un deuxième étage pour transformer chacun des n*K multiplex issus du premier étage en un nombre de copies égal à n'*(x1+1), et
- un troisième étage de sélection permettant de sélectionner L signaux optiques parmi les nK(x1+1) multiplex reçus par un port de sortie PS.

Les n*K lignes de l'ensemble peuvent être présentées en entrée du bloc de sélection simplifié, ce dernier produisant en sortie un nombre de lignes de sortie égal au nombre total L de valeurs de longueurs d'onde acceptées en entrée du dispositif.

Il peut comprendre en outre un multiplexeur à L entrées recevant respectivement chacune des lignes de sortie desdits blocs de sélection simplifiés et une sortie sur une fibre de sortie du port de sortie correspondant.

Dans le cas de la deuxième variante, le dispositif peut présenter un nombre n de ports d'entrée et un nombre n' de ports de sortie, les nombres n et n' pouvant être égaux ou différents, chaque port d'entrée comprenant un multiplex spectral comprenant un nombre L de porteuses ayant respectivement L longueurs d'onde distinctes, le dispositif comprenant en outre :
- un premier étage tampon permettant d'imposer des un nombre K de copies mutuellement décalées dans le temps de chacune des n signaux optiques en entrée,
- un deuxième étage pour transformer chacun des n*K signaux issus de premier étage en un nombre de copies égal à L*x2+n'-x2, et
- un troisième étage de sélection permettant de sélectionner L signaux optiques parmi les n*KL multiplex reçus par un port de sortie avec conversion totale et permettant de sélectionner L signaux optiques parmi les n*K multiplex reçus par un port de sortie sans conversion.

Selon un deuxième aspect, l'invention concerne un réseau de communication optique comprenant au un moins noeud permettant de relier des lignes d'entrée et de sortie, caractérisé en ce que ledit noeud comprend au moins dispositif de commutation selon le premier aspct, relié un ensemble de lignes d'entrée sur ses ports d'entrée et à un ensemble de lignes de sortie sur ses ports de sortie.

Le dispositif de commutation peut alors être relié en outre à au moins une passerelle.

Le réseau peut gérer des contentions par répartition dans le temps des paquets, notamment lorsque les paquets en contention ne peuvent faire l'objet d'une conversion de longueur d'onde en raison de la limitation de capacité de conversion de longueur d'onde, et par répartition spectrale et temporelle, notamment lorsque le paquet en contention peut faire l'objet d'une conversion de longueur d'onde.

Selon un troisième aspect, l'invention concerne l'utilisation d'un dispositif de commutation selon le premier aspect pour la commutation de flux dans un noeud de réseau de communication, avec gestion des contentions par répartition dans le temps des flux, notamment lorsque les flux en contention ne peuvent faire l'objet d'une conversion de longueur d'onde en raison de ladite limitation de capacité de conversion de longueur d'onde, et par répartition spectrale et temporelle, notamment lorsque le flux en contention peuvent faire l'objet d'une conversion de longueur d'onde.

Selon un quatrième aspect, l'invention concerne un procédé de commutation de signaux optiques avec capacité de conversion de longueur d'onde de porteuse, comprenant un ensemble de ports d'entrée, un ensemble de ports de sortie fonctionnellement reliés aux ports d'entrée de manière qu'un signal d'entrée présenté sur l'un des ports d'entrée puisse être aiguillé sélectivement vers au moins l'un des ports de sortie, des moyens de conversion de longueur d'onde permettant de disposer d'une capacité de conversion de longueur d'onde de porteuse d'un signal en entrée vers au moins une autre longueur d'onde en sortie de port de sortie,
caractérisé en ce que l'on limite la capacité de conversion de longueur d'onde en utilisant au moins l'une des trois possibilités de limitation i) à iii) :
i) avec l'un au moins desdits ports de sortie, aucune conversion de longueur ne peut intervenir pour l'émission d'un signal d'un port d'entrée ;
ii) avec l'un au moins desdits ports de sortie, la conversion peut intervenir pour l'émission d'un signal d'un port d'entrée, mais avec conversion de longueur d'onde porteuse possible seulement vers un nombre restreint de valeurs de longueur d'onde parmi le nombre L de valeurs de longueurs d'onde acceptées en entrée, ce nombre restreint étant supérieur à 0 et inférieur à L, et
iii) avec un nombre restreint seulement de ports de sortie inférieur au nombre total de ports de sortie du dispositif de commutation, la conversion peut intervenir pour faire émettre un signal d'un port d'entrée (PE) avec conversion de longueur d'onde possible vers toute valeur de longueur d'onde parmi le nombre L de valeurs de longueurs d'onde distinctes acceptées en entrée.

Les aspects optionnels et variantes présentés dans le cadre du dispositif ou du réseau selon les première au troisième aspects précités s'appliquent mutatis mutandis à ceprocédé.

L'invention et les avantages qui en découlent apparaîtront plus clairement à lecture de la description qui suit des modes de réalisation préférés, donnés purement à titre d'exemples non-limitatifs par références aux dessins annexés dans lesquels :
- la figure 1, déjà décrite, est un schéma simplifié d'un réseau de communication optique dans lequel l'invention peut être mise en oeuvre ;
- la figure 2, déjà décrite, est un schéma bloc général simplifié d'un matrice de commutation optique, montrant notamment les relations entre les unités de ports d'entrée et de sortie ;
- la figure 3, déjà décrite, est un schéma bloc plus détaillée d'une matrice optique de commutation, montrant des éléments internes de l'architecture des unités de ports d'entrée et de sortie, ainsi que des tampons à ligne à retard utilisés ;
- la figure 4, déjà décrite, est un schéma détaillé montrant les SOA qui interviennent dans deux étages successifs de sélection en sortie de la matrice optique de la figure 3 ;
- la figure 5a est un schéma simplifié de l'architecture d'une matrice optique de commutation conforme à une première variante de l'invention ;
- la figure 5b est une loupe sur la figure 5a, montrant de façon plus détaillée les sorties d'un port de sortie de la matrice ;
- la figure 6a est un schéma simplifié de l'architecture d'une matrice optique de commutation conforme à une deuxième variante de l'invention ;
- la figure 6b est une loupe sur la figure 6a, montrant de façon plus détaillée les sorties d'un port de sortie de la matrice ;
- la figure 7 est un schéma plus détaillé d'une architecture de port de sortie et de certaines connexions internes conformes à la première variante de l'invention ;
- la figure 8 est un schéma plus détaillé d'une architecture de port de sortie et de certaines connexions internes conformes à la deuxième variante de l'invention ;
- la figure 9 est un schéma de mise en oeuvre d'une matrice optique de commutation conforme à l'invention dans un réseau avec branchement sur une passerelle, présentant un cas de fonctionnement avec des flux partant de la passerelle ; et
- la figure 10 est un schéma de mise en oeuvre d'une matrice de commutation conforme à l'invention dans un réseau avec branchement sur une passerelle, présentant un cas de fonctionnement avec des flux arrivant à la passerelle.

Les modes de réalisation de l'invention décrits concerne la commutation de données optiques sous forme de paquets, bien que d'autres structures de données peuvent être envisagées.

Ainsi que précisé plus haut, l'invention relève du constat par la demanderesse que, selon l'architecture de réseau considéré, la conversion/régénération sur la totalité des longueurs d'onde et/ou à chaque chemin optique d'entrée ou de sortie n'est pas toujours nécessaire dans les matrices optiques de commutation, telles que celles qui gèrent des paquets optiques. Ainsi, conformément à l'invention, on limite l'utilisation de tels convertisseurs /régénérateurs afin de simplifier l'architecture des noeuds, par exemple en en équipant que sur certains de ports ou que partiellement sur chaque port. De la sorte, puisque l'on ne prévoit pas une conversion de longueurs d'onde complète (c'est-à-dire sur toutes les longueurs d'onde porteuse possibles et sur toutes les sorties des ports de sortie) à la sortie des matrices de commutation optique pour les ports dépourvus de convertisseur/régénérateur, les seules longueurs d'onde d'entrée en contention pour une longueur d'onde de sortie donnée λi sont les longueurs d'onde de cette même valeur λi à chaque fibre d'entrée.

Ainsi, le deuxième niveau de sélection de longueur d'onde réalisé par l'ensemble d'interconnexion optique 29 avec convertisseurs 34 selon l'architecture selon les figures 3 et 4 peut être supprimé, ou du moins grandement simplifié au niveau d'un port de sortie donné. En effet, la sélection de longueur d'onde systématique n'est alors plus nécessaire, et la taille des coupleurs optiques pour la diffusion (coupleurs 1:nL) peut être réduite.

Dans ce qui suit, L désigne le nombre longueurs d'ondes de porteuse possibles pour les signaux traités par la matrice de commutation, et n désigne le nombre de ports d'entrée ou le nombre de ports de sortie de la matrice de commutation.

Deux variantes sont envisagées pour la mise en oeuvre du principe de l'invention :
- variante 1 : tous les ports ne disposent que d'un certain nombre de longueurs d'onde pour lesquelles il y a possibilité de la conversion, ce qui constitue la solution désignée ci-après "x1/L possibilités de conversion de longueur d'onde λ sur tous ports", où x1 désigne ci-après un nombre entier supérieur à 0 et inférieur à L, et
- variante 2 : certains ports de sortie n'ont aucune capacité de conversion, et d'autres ont la possibilité conversion complète, ce qui constitue la solution désignée ci-après "x2/n ports à conversion complète de longueur d'onde λ", où x2 désigné un nombre entier supérieur à 0 et inférieur à n.

Ici, le terme "conversion complète" entend la possibilité de convertir toute longueur en entrée d'un ensemble de longueurs d'onde λ1 à λL vers tout autre longueur d'onde de cet ensemble. Par contre, une possibilité de conversion réduite à la fraction de x1/L ou x2/n possibilités entend respectivement que seule le nombre x1 des L de longueurs d'onde peut faire l'objet d'une conversion, pour un port donné, ou que seul le nombre x2 des n ports de sortie ne disposera de moyens de conversion complète vers l'une quelconque des longueurs d'onde λ1 à λL.

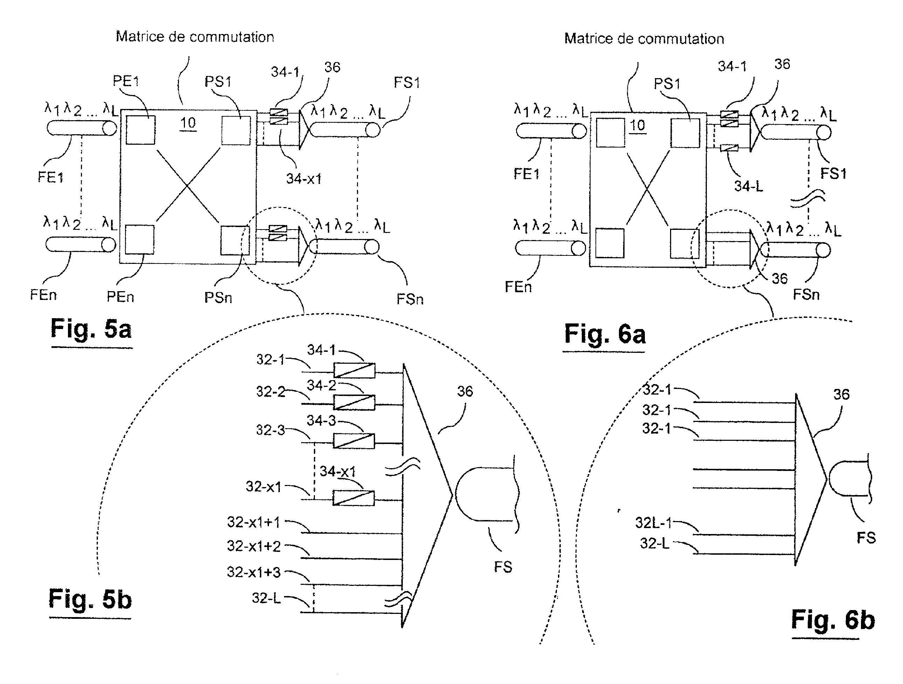

La structure générique conforme à variante 1 précitée est représentée aux figures 5a et 5b. Ces figures représentent de manière simplifiée une matrice de commutation "n x n" 10 telle que représentée aux figures 3 et 4, avec ses connexions sur des fibres d'entrée FE et de sortie FS. Les n ports d'entrée PE1 à PEn peuvent être de structure analogue à celle de la figure 3, et ne seront pas décrits de nouveau par souci de concision. Cependant, selon un aspect avantageux de l'invention, on peut se dispenser de l'étage de conversion/régénération des ports d'entrée, constitué par l'ensemble : premier démultiplexeur 16/premier convertisseur de longueur d'onde 18/premier multiplexeur 20. En effet, la simplification de l'architecture conforme à l'invention limite les pertes et peuvent rendre cet étage inutile. Les descriptions des figures qui suivent sont basées sur cette option sans étage de conversion/régénération aux ports d'entrée. Dans ce cas, chacune des fibres d'entrée FE1 à FEn attaque un coupleur optique (non représenté) qui alimente les K entrées respectives des lignes à retard 24-1 à 24-K ; les fibres FE1 à FEn sont alors directement connectées aux points 22-1 à 22-n de la figure 3.

A la différence de l'architecture des la figures 3 et 4, l'ensemble des n ports de sortie PS est réalisé de manière simplifiée en ne prévoyant que seul un nombre x1 des L sorties 32-1 à 32-L de port soient prévus pour être reliées à un étage de conversion/régénération respectif 34-1 à 34-x1, comme le montre plus précisément la loupe sur les sorties représentée à la figure 5b. Pour chacune de ces x1 sorties, les chemins optiques en amont, à savoir le multiplexeur 30, le coupleur optique 28 et le groupe d'entrées 26 sont en pratique analogues à ceux de la figure 3.

La simplification de l'étage de sortie, soit de diffusion, intervient au niveau des L-x1 autres sorties 32-x1+1 à 32L. Celles-ci attaquent directement le multiplexeur 36 en tête de fibre de sortie FS sans interposition d'étage de conversion/régénération 34. Au sein du port de sortie, cela permet de simplifier notamment le couplage optique, moyennant l'adjonction de démultiplexeurs, comme il est expliqué plus loin. Si on compare cette architecture à une structure classique dite de diffusion et de sélection (également connue par le terme anglais "broadcast and select"), par exemple selon la figure 3, on constate qu'au niveau de diffusion - interconnexion 12 - on peut réduire la taille des coupleurs optiques après les lignes à retard de n*L à n*(x1+1), où x1 est le nombre de longueurs d'onde parmi les n avec conversion. En effet, il suffit ici de diffuser les données vers les n ports de sorties PS-1 à PS-n (facteur n commun au 2 formules), puis par port de sortie : on diffuse vers les x1 groupes à conversion + 1 diffusion vers l'ensemble des L-x1 groupes sans conversion. La diffusion totale est alors limitée à n*(x1+1). Cela vient principalement du fait que pour chacun des groupe sans conversion (pour chacune des longueurs d'onde sans conversion d'un port de sortie), on n'a résoudre la contention qu'entre les données venant de chacun des ports d'entrée sur cette même longueur d'onde, alors que pour les groupes avec conversion, on a à résoudre la contention entre les données arrivant sur toutes les longueurs d'onde (λ1 à λL) de tous les ports d'entrée. dans les deux cas, on garde cependant la flexibilité temporelle pour résoudre la contention (accès aux K retards pour toutes les longueurs d'onde).

A titre d'exemple, soit un commutateur 2x2 avec quatre longueurs d'onde par port. sur les ports de sorties, les longueurs d'onde λ1 et λ2 sont avec conversion et les longueurs d'onde λ3 et λ4 sont sans conversion. Sur les groupes 1et 2, on peut recevoir les paquets venant de λ1, λ2, λ3 et λ4 sur un des deux ports d'entrée, alors que sur le port 3 et 4, on ne peut recevoir respectivement que les paquets venant de λ3 et λ4 sur un des deux ports d'entrée. la diffusion (après les retards) est donc de 6 au lieu de 8 dans un cas à conversion complète.

La structure générique conforme à la variante 2 est représentée aux figures 6a et 6b, qui sont des schémas analogues à ceux des figures 5a et 5b.

Dans ce cas, le fractionnement x2/n des capacités de conversion est assuré en prévoyant que seul un nombre x2 des n ports de sortie PS1 à PSn soient dotés de toutes les capacités de conversion et de régénération. Chacun de ces x2 ports est donc en tout point identique à un port de sortie PS de la figure 3, ses n sorties 32-1 à 32n attaquant le multiplexeur 36 de sa fibre de sortie FS également via L étages de conversion/régénération respectifs 34-1 à 34-L.

La simplification provient alors des n-x2 autres ports de sortie PSx2+1 à PSn, pour lesquels on ne prévoit pas d'étage de conversion et de régénération en sortie. Ainsi que le montre plus précisément la loupe sur les sorties représentée à la figure 6b, les L sorties 34-1 à 34-L de chacun de ces n-x2 autres ports attaquent directement le multiplexeur 36 en tête de sa fibre de sortie FS. Au sein de ces n-x2 ports, cela permet de simplifier notamment les couplages optiques et d'éliminer les deuxième multiplexeurs 28, moyennant l'adjonction de démultiplexeurs/répartiteurs, comme il est expliqué plus loin, comme pour la variante 1.

Ainsi, dans les deux variantes 1 et 2, la complexité de la matrice optique de commutation est fortement réduite comparativement à l'état de la technique, car la diffusion dans la matrice de commutation n'est que partielle.

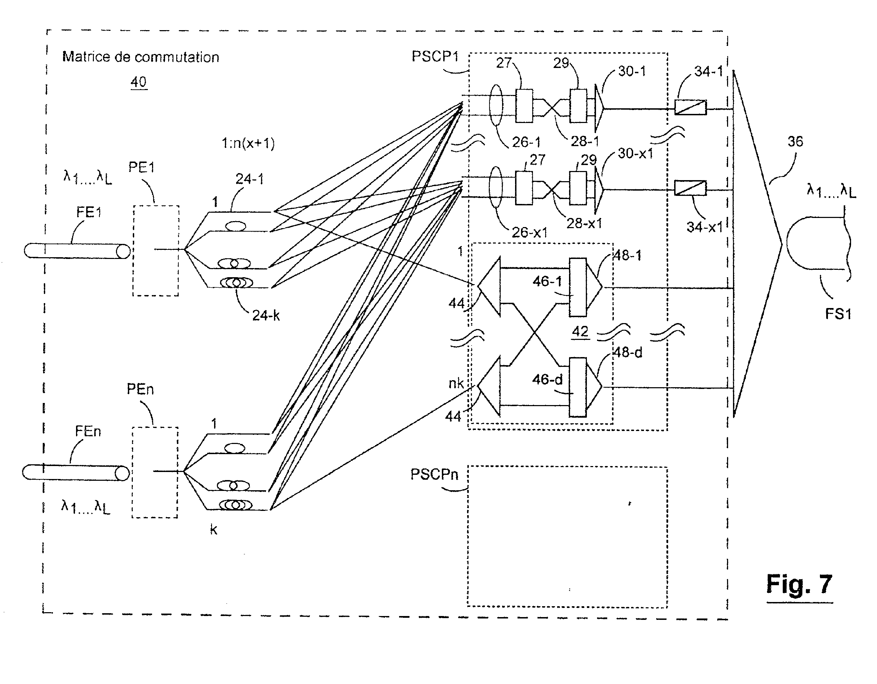

La figure 7 représente de façon plus détaillée l'architecture interne d'une matrice de commutation 40 conforme à la variante 1 précitée, dont la structure générale est décrite par référence aux figures 5a et 5b. Tous les n ports de sortie, désignés de manière générique par PSCP (port de sortie à conversion partielle) sont identiques, et seulement l'une PSCP1 qui attaque la fibre de sortie FS1 est représentée en détail. De même, tous les n ports d'entrée sont identiques, et seules sont représentées les sorties 1 à k des lignes à retard en provenance de deux de ces derniers, en l'occurrence les ports d'entrée PE1 et PEs (cf. figure 3).

La conversion totale de longueur d'onde avec régénération est assurée par les x1 premiers groupes d'entrées 26-1 à 26-x1, dont seulement le premier et le x1^{ième} sont représentés. Pour chacun de ces groupes 26-1 à 26-x1, les chemins et moyens de traitement optiques sont les mêmes que pour n'importe quel autre groupe d'entrée 26 de la figure 3. On y retrouve donc pour chacun, successivement : un ensemble de couplage nK:L 28, un deuxième multiplexeur 30 et un étage de conversion/régénération 34. La sortie de chacun de ces x1 étages 34-1 à 34-x1 attaque le multiplexeur de sortie 36 en tête de fibre de sortie FS.

Les L-x1 autres entrées de ce multiplexeur de sortie 36 proviennent directement d'une structure optique de sélection 42 qui recueille n*K sorties de ligne à retard, chacune sur un démultiplexeur respectif 44. Plus précisément, la structure optique de sélection 42 reçoit sur ses n*K multiplexeurs 44 respectifs les K sorties des lignes à retard 24-1 à 24-4 pour chacun des n ports d'entrée PE1 à PEn.

Les L-x1 sorties de ces n*K démultiplexeurs 44 (correspondant aux L-x1 longueurs d'onde sur le port de sortie sans conversion)sont recueillies par un ensemble de barrettes de sélection composé d'un nombre d de barrettes de sélection 46-1 à 46-d, où d est égal à L-x1. Chaque barrette reçoit les données portées par une même longueur d'onde mais venant des n*K démultiplexeurs 44. Ainsi, chacune de ces d barrettes permet de sortir sur un coupleur nK :1 respectif 48-1 à 48-d (désignation générique 48) l'une quelconque des entrées présentées à une fibre de port d'entrée FE1 à FEn avec l'un quelconque des K retards possibles par les lignes à retard 24-1 à 24-K, mais seulement à la longueur d'onde d'origine présente à la fibre d'entrée. Chaque sortie des coupleurs 48 est présentée sur l'entrée respective du multiplexeur de sortie 36 correspondant à la longueur d'onde en sortie de chaque bloc de sélection 46. On remarque donc que ce dernier comporte L entrées, dont un nombre x1 sont à conversion de longueur d'onde et le complément L-x1 = d est sans conversion de longueur d'onde.

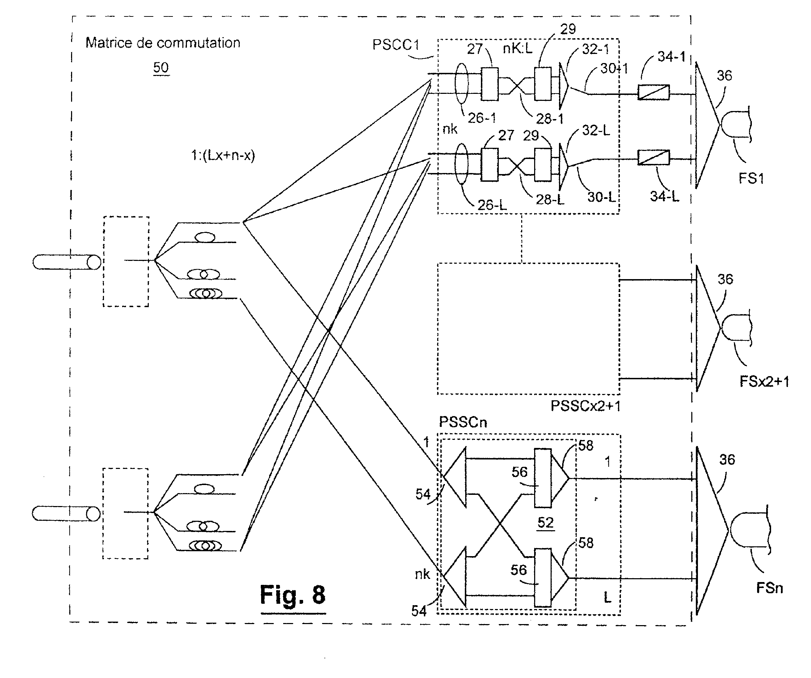

La figure 8 représente de façon plus détaillée l'architecture interne d'une matrice de commutation 50 conforme à la variante 2 précitée, dont la structure générale est décrite par référence aux figures 6a et 6b. Les ports de sortie sont de deux types : à conversion complète (désignation générique PSCC) et à sans conversion (désignation générique PSSC). Les ports de sortie à conversion complète sont au nombre de x2, PSCC1 à PSCCx2. Leur fonctionnement et leur connexions aux n ports d'entrée PE1 à PEn via les lignes à retard 24-1 à 24-n sont conformes à la description par référence à la figure 3 et ne seront pas répétés par souci de concision. Les fibres de sortie FS1 à FSx2 de ces ports PSCC permettent donc chacune de retransmettre toutes données présentées sur les ports d'entrée PE1 à PEn, avec possibilité de sélection parmi les K retards, et ce sur n'importe laquelle des L longueurs d'onde.

Par contre, les n-x2 autres ports de sortie sans conversion PSSCx2+1 à PSSCn ne prévoient pas de conversion de longueur d'onde des données présentées à leurs entrées. Leur fonction se limite à sélectionner sur leur fibre de sortie FS respective toutes données présentées sur les ports d'entrée PE1 à PEn, avec possibilité de sélection parmi les K retards pour résoudre la contention longueur d'onde par longueur d'onde

A cette fin, chaque port de sortie sans conversion PSSC comporte un ensemble de sélection 52 à n*K entrées, respectivement une pour chacun des n ports d'entrée PE1 à PEn, démultipliée par chacune des K possibilités de retard. L'ensemble de sélection 52 comporte un nombre n*K de démultiplexeurs 54, un pour chaque entrée, et un nombre L de barrettes de sélection 56, chacune associée à un coupleur 58, à l'instar de l'ensemble de sélection 42 de la figure 7. La sortie de chacun des n*K démultiplexeurs 54 est transmise à chacune des L barrettes de sélection 56, chacune des barrettes traitant uniquement une longueur d'onde. Les L coupleurs 58 attaquent directement L entrées respectives du multiplexeur de sortie 36, en associant une à une les longueurs d'onde de sortie des blocs de sélection 56 avec les longueurs d'onde d'entrée du multiplexeur 36,de sorte que cette dernière puisse sortir l'une des n*K entrées sur sa fibre de sortie associée.

Les architectures selon les variantes 1 et 2 précitées sont fonctionnellement équivalentes l'une à l'autre, et permettent de simplifier considérablement les architectures de l'art antérieur (cf. figure 3) grâce à la réduction du nombre de convertisseurs de longueur d'onde d'entrée: les fibres d'entrée sont avantageusement reliées directement à la mémoire tampon optique constitué par les lignes à retard 24-1 à 24-K (sans tampon, on a simplement k=1), et chaque peigne de longueur d'onde est ainsi diffusé à chaque ligne à retard. Par ailleurs, la taille du coupleur optique à l'étage de sortie est réduite comparativement à celle selon la figure 3. En effet, chaque retard est diffusé vers chaque port de sortie PS, mais pas nécessairement vers chaque longueur d'onde de ces ports de sortie. La diffusion n'est totale que vers les longueurs de sortie avec conversion, alors qu'une diffusion limitée est suffisante vers les ports sans conversion, le complément de diffusion étant apporté par démultiplexage spectrale et correspondance une-à-une entre longueurs d'onde d'entrée et longueur d'onde de sorties. Alors, la sélection est semblable à celle de la figure 3 pour les ports avec conversion/régénération de longueur d'onde (en l'occurrence, deux étages de portes optiques), mais elle est simplifiée pour les ports sans conversion de longueur d'onde, ces derniers ne nécessitant qu'un seul étage de portes optiques (il n'y a pas d'étage supplémentaire de sélection de longueur d'onde active, la sélection de longueur d'onde étant réalisée de manière passive au moyen du démultiplexeur 44 dans le premier cas ou 54 dans le deuxième cas).

On comprend d'après les figures 7 et 8 que la valeur x1 ou x2 précitée se conçoit comme un facteur qui représente le taux partiel d'utilisation de la conversion/régénération dans l'architecture (x1 parmi les L longueurs d'onde sur chaque fibre de sortie dans la figure 5a, 5b ou 7, et x2 parmi les n fibres de sortie dans la figure 6a, 6b ou 8). Les coupleurs de diffusion sont donc réduits, dans le cas de la figure 7, à un coupleur 1:n(x+1) et, dans le cas de la figure 8, à un coupleur (Lx+n-x).

Lorsque x=0, la matrice de commutation optique n'a pas de conversion de longueur d'onde, et lorsque x1=L dans la cas de la figure 7, ou lorsque x2=n dans le cas de la figure 8, la matrice de commutation optique a la totale capacité de conversion.

Dans les modes de réalisation selon les figures 7 ou 8, qui emploient des portes optiques sous forme d'amplificateurs optiques à semiconducteur fonctionnant en multiplexage à répartition de longueur d'onde, L doit est de préférence inférieur à 32 afin de limiter le nombre de longueurs d'onde dans chaque amplificateur. Sinon, l'architecture peut être modifiée conformément à la demande de brevet français FR 0015889, en utilisant un démultiplexage de bande à l'entrée (b bandes destinées à avoir L/b longueurs d'onde par amplificateur).

En n'utilisant une conversion de longueur qui n'est que partielle, conformément à l'invention, on simplifie l'étage de sélection des commutateurs des données optiques. Ceci a un impact direct sur le volume de moyens matériels nécessaires pour mettre en oeuvre les matrices de commutation optiques, et permet donc de réduire les coûts. Le tableau I résume le volume de moyens matériels mis en oeuvre dans chaque cas pour illustrer les bénéfices que l'on peut tirer de l'invention.

**Tableau I :**

| **volume de matériel requis pour différentes configurations de matrices de commutation optique.** | | | | |
|---|---|---|---|---|
| Architecture | Mux | Coupleurs | Portes optiques | conversion de λ |
| Classique (cf. Fig.3) | Mux L λs([L+3]*n) | 1:K(n) | [nK+L]*nL | 2nL |
| | | 1:nL(nK) | | |
| et L<32, | | NK:L(nL) | | |
| Variante 1 : x1/n poss. conv. λ/tous ports (Figs. 4a, 4b & 6) | Sans PE : | 1:K(nb) | [nK+x1]*nL dit autrement : [nk+L]*nx1 (lambda avec conv.) + nK*[L-x1]*n (lambda sans conversion) | nx1 sans PE n(L+x1) avec PE |
| | Mux L | 1:n[x+1](nK) | | |
| | λs([x1+1]*n) | nK:L(nx1) | | |
| | Avec PE : | nK:1(n*[L-x]) | | |
| | Mux L | | | |
| | λs([x1+3]*n) | | | |
| | Dans les 2 cas : | | | |
| | Mux L-x1 (nK*[L-x1]*n | | | |
| Variante 2 : x2/n ports à conv. complète de λ (Figs. 5a, 5b et 7) | Sans PE: | 1:K(n) | [n²K+Lx2]*L dit autrement : [nk+L]*Lx2 (ports avec conv.) + nKL*[n-x2] (ports sans conversion) | Lx2 sans PE (nL+Lx2) avec PE |
| | Mux L | 1:[Lx+nx2](nK) | | |
| | λs([L+1]*x2 + nk*[n-x2]) | | | |
| | | nK:L(x2L) | | |
| | Avec PE: | nK:1([n-x2]*L | | |
| | Mux L | | | |
| | λs([L+1]*x2 + nk*[n-x2] + 2n) | | | |

La réduction en termes d'amplificateurs optiques à semiconducteur comparativement à une architecture classique telle que représentée à la figure 1, est de (L-x1)*nL dans le cas de la variante 1 (figures 5 et 7, et de (n-x2)*L² dans le variante 2 figures 6 et 8). A titre d'exemple, on peut envisager une architecture 4x4, avec 16 longueurs d'onde par sortie de fibre et un tampon à 8 positions (n=4, L=16 et K=8).

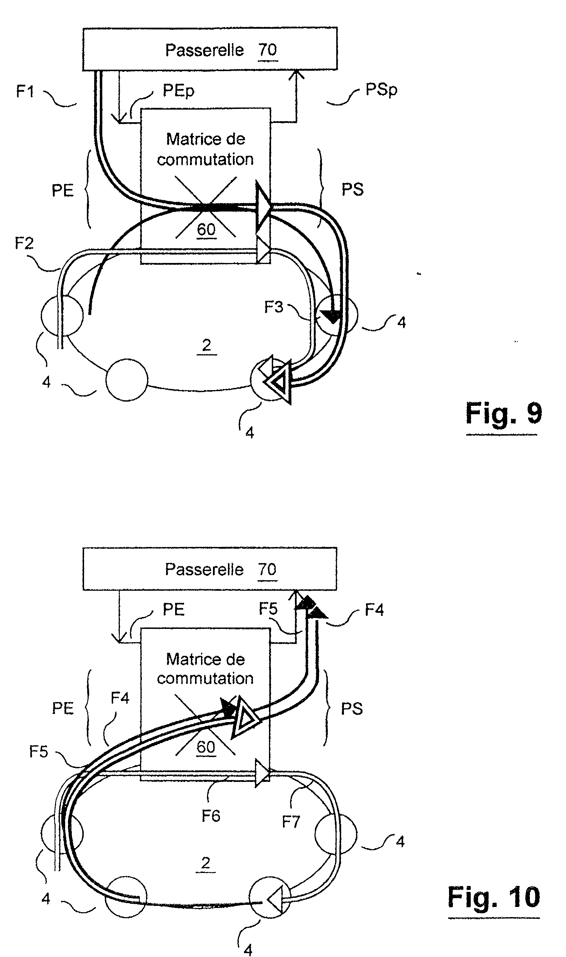

En limitant la conversion de longueur d'onde à la moitié des ressources (50% des longueurs d'onde sur chaque fibre dans le cas de la variante 1 (figures 6 et 8), et 50% de fibres dans le cas de la variante 2 (figures 7 et 9) on économise dans les deux cas 512 amplificateurs optiques à semiconducteur, soit presque 20% du nombre total des amplificateurs utilisés dans une architecture à capacités semblables selon l'art antérieur de la figure 3. A titre indicatif, la taille des coupleurs de diffusion peut être alors de 1:36 dans le cas de la figure 8, au lieu de 1:64 selon la figure 3.

Dans la pratique, on sera amené à utiliser dans cet exemple un coupleur 1:64, mais dans d'autres cas la réduction de couplage pourrait bien cadrer avec des tailles de coupleurs existantes (en prenant 7 longueurs d'onde avec conversion de longueur d'onde parmi 16 du même exemple dans le cas de la figure 8 donnerait lieu à un coupleur 1:32).

On comprendra qu'il est également possible de combiner les variantes 1 et 2 précitées, pour produire, par exemple, une matrice de commutation dont au moins un port de sortie permet une conversion sur toutes les longueurs d'ondes, alors qu'au moins un autre port soit limité pour ne permettre une conversion que sur un nombre restreint des longueurs d'onde distinctes traitées sur les ports d'entrée, ou encore, une matrice de commutation avec certains ports à conversion partielle et d'autres sans conversion.

Les figures 9 et 10 illustrent des exemples de fonctionnement d'une matrice optique de commutation de paquets optiques conforme à l'une ou l'autre des variantes 1 et 2 de l'invention pour le routage de données en paquets à un noeud d'un réseau optique comportant une passerelle de connexion locale.

Dans l'exemple des figures 9 et 10, une matrice de commutation 60, pouvant être notamment conforme à celle 40 de la figure 7 ou celle 50 de la figure 8, est reliée d'une part à une passerelle 70 et d'autre part à un réseau optique 2 sous forme d'anneau. Plus particulièrement, au moins une sortie de la passerelle est reliée à un port d'entrée PEp respectif de la matrice 60, et au moins un port de sortie PSp de celle-ci est reliée à une entrée respective de la passerelle. Ces ports PEp et PSp permettent donc à la passerelle 70 respectivement d'émettre et de recevoir des paquets de données optiques sur le réseau, conformément à une connexion classique. Typiquement, la passerelle sert à assurer une connexion entre le réseau et un sous-réseau, par exemple un réseau métropolitain.

Les autres ports d'entrée et de sortie de la matrice de commutation 60 sont reliés au réseau afin de permettre d'une part d'acheminer des données de transit dans le réseau et d'autre part d'extraire ou d'introduire les données au compte de la passerelle.

Les communications entre la passerelle 70 et le réseau sont gérées par un protocole de type MAC. Ce protocole, utilisé notamment en l'absence de mémoire sur le trajet, garantie que les paquets à la source se retrouvent bien à destination. Dans ce cas, les paquets restent sur une porteuse de même longueur d'onde sur tout leur trajet bout à bout

Cependant, selon les situations, il peut aussi être nécessaire de réaliser une conversion de longueur d'onde porteuse au niveau de la matrice de commutation 60 entre la passerelle 70 et le réseau 2, ou encore dans le transit sur le réseau passant par la matrice.

Ainsi, on prévoit des chemins via la matrice qui peuvent être utilisés sans conversion de longueur d'onde et également des chemins avec conversion de longueur d'onde pour régler les cas de contention. Le choix d'utiliser ou non une conversion de longueur d'onde au niveau de la matrice 60 est lui aussi géré par le protocole MAC.

La commutation à conversion partielle selon l'invention permet alors de répondre à l'ensemble des besoins et en même temps de simplifier l'architecture.

Dans le cas de fonctionnement de la figure 9, des données sont émises depuis la passerelle 70 vers un port d'entrée PEp de la matrice de commutation 60 (lignes fléchée F1). En parallèle, un trafic de données circule en transit à travers la matrice (ligne fléchées F2 et F3). La gestion de flux à travers la matrice de commutation fait alors appel à une conversion partielle de longueur d'onde par fibre, avec résolution de contention réalisée par le protocole MAC. Une partie du trafic est donc routée sans conversion, et seulement le trafic en contention fait l'objet d'une conversion de longueur d'onde.

Dans le cas de fonctionnement de la figure 10, des données (flèches F4 et F5) du réseau 2 sur des longueurs respectives sont aiguillées par la matrice de commutation 60 vers la passerelle 70, avec en parallèle des données qui circulent en transit à travers la matrice (lignes fléchées F6 et F7). Dans ce cas, il n'est pas nécessaire d'effectuer une conversion de longueur d'onde sur les données F4 et F5 du réseau pour les transférer à la passerelle. La résolution de contentions est gérée par le protocole MAC pour l'anneau formant le réseau, et il n'existe aucune contention entre la matrice et la passerelle (si on a autant de longueurs d'onde sur le port d'entrée PE de la matrice relié à l'anneau que sur le port de sortie PSp). Si un terminal connecté à la passerelle peut avoir accès à la matrice avec une longueur d'onde donnée, celle-ci restera toujours disponible pour la communication entre la matrice 60 et la passerelle 70, puisqu'il n'y a pas de contention avec le traffic venant de PEp

De nombreux modes de réalisation et de variantes peuvent être envisagés tout en restant dans le cadre de l'invention, par exemple en ce qui concerne les moyens matériels, fonctionnels, de gestion, ainsi que le dimensionnement du matériel.

## Revendications

1. Dispositif de commutation de signaux optiques avec capacité de conversion de longueur d'onde de porteuse, comprenant un ensemble de ports d'entrée (PE1-PEn), un ensemble de ports de sortie (PS1-PSn) fonctionnellement reliés aux ports d'entrée de manière qu'un signal d'entrée présenté sur l'un des ports d'entrée puisse être aiguillé sélectivement vers au moins l'un des ports de sortie, des moyens (34) de conversion de longueur d'onde permettant de disposer d'une capacité de conversion de longueur d'onde de porteuse d'un signal en entrée vers au moins une autre longueur d'onde en sortie de port de sortie,
**caractérisé en ce que** lesdits moyens de conversion (34) sont limités dans ladite capacité de conversion de longueur d'onde par au moins l'un des trois moyens de limitation i) à iii) :
i) avec l'un au moins desdits ports de sortie (PS), aucune conversion de longueur ne peut intervenir pour l'émission d'un signal d'un port d'entrée ;
ii) avec l'un au moins desdits ports de sortie (PS), la conversion peut intervenir pour l'émission d'un signal d'un port d'entrée (PE), mais avec conversion de longueur d'onde porteuse possible seulement vers un nombre restreint de valeurs de longueur d'onde parmi le nombre L de valeurs de longueurs d'onde acceptées en entrée, ce nombre restreint étant supérieur à 0 et inférieur à L, et
iii) avec un nombre restreint seulement de ports de sortie (PS) inférieur au nombre total de ports de sortie du dispositif de commutation, la conversion peut intervenir pour faire émettre un signal d'un port d'entrée (PE) avec conversion de longueur d'onde possible vers toute valeur de longueur d'onde parmi le nombre L de valeurs de longueurs d'onde distinctes acceptées en entrée.

2. Dispositif selon la revendication 1, **caractérisé en ce que** lesdits moyens de conversion (34) sont limités dans ladite capacité de conversion de longueur d'onde de manière à ce que la conversion puisse intervenir pour l'émission d'un signal d'un port d'entrée (PE1 à PEn) par tout port de sortie (PS1 à PSn), mais avec conversion de longueur d'onde porteuse possible, avec chacun des ports de sortie, seulement vers un nombre restreint x1 de valeurs de longueur d'onde parmi le nombre L de valeurs de longueurs d'onde distinctes acceptées en entrée, x1 étant supérieur à 0 et inférieur à L.

3. Dispositif selon la revendication 1, **caractérisé en ce que** lesdits moyens de conversion (34) sont limités dans ladite capacité de conversion de longueur d'onde de manière à ce que la conversion puisse intervenir pour l'émission d'un signal d'un port d'entrée (PE1 à PEn) avec conversion de longueur d'onde possible vers toute valeur de longueur d'onde parmi le nombre L de valeurs de longueur d'onde distinctes acceptées en entrée, mais seulement pour des commutations sur un nombre restreint x2 de ports de sortie (PS1 à PSx2), x2 étant supérieur à 0 et inférieur au nombre de ports de sortie du dispositif.

4. Dispositif selon l'une quelconque des revendications 1 à 3, **caractérisé en ce qu'**il est du type apte à commuter les signaux se présentant sous forme de paquets de données optiques.

5. Dispositif selon l'une quelconque des revendications 1 à 4, **caractérisé en ce que** ladite limitation des moyens de conversion (34) intervient au niveau d'au moins un des ports de sortie (PS), chaque port de sortie auquel intervient ladite limitation comportant un premier nombre d'entrées de lignes de signal en provenance des ports d'entrée (PE), et un second nombre L de lignes de sortie, ce second nombre représentant le nombre de longueurs d'onde distinctes sur les ports de sortie PS, et **en ce que** parmi ce second nombre au moins une des lignes de sortie est dépourvue de moyens de conversion de longueur d'onde, ne servant qu'à l'émission en sortie d'un signal avec la même longueur d'onde que celle à laquelle ce signal est reçu en entrée.

6. Dispositif selon l'une quelconque des revendications 1 à 5, **caractérisé en ce que** chaque port de sortie (PS) faisant intervenir une limitation de conversion de longueur d'onde comporte un bloc de sélection simplifié (42; 52), permettant de regrouper sur chaque ligne de sortie sans conversion les signaux venant des lignes d'entrée ayant la même longueur d'onde que celle de la ligne de sortie, le bloc comprenant en outre, pour chaque ligne de sortie sans conversion, des moyens (46; 56) de sélection spatiale pour la sélection de lignes d'entrée, ces moyens de sélection étant dépourvus de moyens de sélection spectrale et couplés en sortie, par des moyens de couplage (48, 58), à ladite ligne de sortie correspondant à la longueur d'onde du bloc de sélection spatial.

7. Dispositif selon l'une quelconque des revendication 1 à 6, **caractérisé en ce qu'**il comprend en outre des moyens de sélection temporelle (24) pour retarder un signal d'un port d'entrée (PE) avant qu'il ne soit émis en sortie d'un port de sortie (PS), les moyens de sélection temporelle présentant aux ports de sortie (PS) un nombre K de copies de signaux reçus sur les ports d'entrée (PE), chaque copie étant décalée dans le temps relativement aux autres.

8. Dispositif selon la revendication 7, **caractérisé en ce que** chaque port de sortie (PS) faisant intervenir une limitation de conversion de longueur d'onde comprend un ensemble lignes d'entrée menant vers des lignes de sortie dépourvues de moyens de conversion, l'ensemble comportant, pour un nombre n de ports d'entrée (PE1 à PEn), un nombre n*K de lignes, une pour chacune desdites K copies décalées dans le temps (24) provenant de chacun des n ports d'entrée.

9. Dispositif selon la revendication 1 ou 2 et 6 et 8, **caractérisé en ce que** lesdites n*K lignes de l'ensemble sont présentées en entrée dudit bloc de sélections simplifiés (42), ces derniers produisant en sortie un nombre (L-x1) de lignes de sortie égal au nombre total L de valeurs de longueurs d'onde distinctes acceptées en entrée du dispositif moins ledit nombre restreint x1 de valeurs de longueur d'onde pour lesquelles une conversion de longueur d'onde porteuse est possible.

10. Dispositif selon la revendication 9, **caractérisé en ce que** chaque port de sortie (PS) comprend un nombre x1 d'ensembles de lignes d'entrée, chacun menant vers une ligne respective des x1 lignes de sortie à conversion, et comprenant n*K lignes d'entrée, ledit port de sortie comportant n*K(x1+1) lignes d'entrée, chacun desdits x1 ensembles de lignes comprenant en outre, pour chacune des valeurs de longueur d'onde dudit nombre restreint x1 de valeurs de longueur d'onde pour lesquelles une conversion de longueur d'onde porteuse est possible :
- un étage de sélection spatiale et temporel (27) recevant en entrée un nombre n*K de lignes d'entrée, une pour chacune desdites K copies décalées dans le temps provenant de chacun des n ports d'entrée et produisant, par l'utilisation d'un coupleur nK :L (28), un nombre L de sorties égal au nombre total L de valeurs de longueurs d'onde acceptées en entrée du dispositif,
- un ensemble de sélection de longueur d'onde, constitué d'un étage de sélection spatiale (29) associé à un multiplexeur (30), recevant en entrée lesdites L sorties et produisant sélectivement l'une d'elles en sortie, et
- un moyen (34) de conversion de longueur d'onde, recevant en entrée la sortie dudit multiplexeur (30) et relié en sortie à une ligne de sortie.

11. Dispositif selon la revendication 10, **caractérisé en ce qu'**il comprend en outre un multiplexeur (36) à L entrées recevant respectivement chacune des (L-x1) de lignes de sortie desdits blocs de sélection simplifiés et les x1 sorties de l'ensemble des multiplexeurs (30-1 à 30-x1), et une sortie émettant sur une fibre de sortie (FS) du port de sortie correspondant.

12. Dispositif selon la revendication 1 ou 2 et l'une quelconque des revendications 4 à 11, **caractérisé en ce qu'**il présente un nombre n de ports d'entrée (PE) et un nombre n' de ports de sortie (PS), les nombres n et n' pouvant être égaux ou différents chaque port d'entrée comprenant un multiplex spectral comprenant un nombre L de porteuses ayant respectivement L longueurs d'onde distinctes, le dispositif comprenant en outre :
- un premier étage tampon (24) permettant d'imposer un nombre K de copies mutuellement décalées dans le temps de chacune des n signaux optiques en entrée,
- un deuxième étage pour transformer chacun des n*K multiplex issus du premier étage en un nombre de copies égal à n'*(x1+1), et
- un troisième étage de sélection permettant de sélectionner L signaux optiques parmi les nK(x1+1) multiplex reçus par un port de sortie PS.

13. Dispositif selon la revendication 1 ou 3, 6 et 8, **caractérisé en ce que** lesdites n^{*}K lignes de l'ensemble sont présentées en entrée dudit bloc de sélection simplifié (52), ce dernier produisant en sortie un nombre (L) de lignes de sortie égal au nombre total L de valeurs de longueurs d'onde acceptées en entrée du dispositif.

14. Dispositif selon la revendication 13, **caractérisé en ce qu'**il comprend en outre un multiplexeur (36) à L entrées recevant respectivement chacune des (L) lignes de sortie desdits blocs de sélection simplifiés et une sortie sur une fibre de sortie (FS) du port de sortie correspondant.

15. Dispositif selon l'une quelconque des revendications 1 ou 3 à 8, **caractérisé en ce qu'**il présente un nombre n de ports d'entrée (PE) et un nombre n' de ports de sortie (PS)les nombres n et n' pouvant être égaux ou différents, chaque port d'entrée comprenant un multiplex spectral comprenant un nombre L de porteuses ayant respectivement L longueurs d'onde distinctes, le dispositif comprenant en outre :
- un premier étage tampon (24) permettant d'imposer des un nombre K de copies mutuellement décalées dans le temps de chacune des n signaux optiques en entrée,
- un deuxième étage pour transformer chacun des n*K signaux issus de premier étage en un nombre de copies égal à L*x2+n'-x2, et
- un troisième étage de sélection permettant de sélectionner L signaux optiques parmi les n*KL multiplex reçus par un port de sortie PS avec conversion totale et permettant de sélectionner L signaux optiques parmi les n*K multiplex reçus par un port de sortie (PS) sans conversion.

16. Réseau de communication optique (2) comprenant au un moins noeud (4) permettant de relier des lignes d'entrée et de sortie, **caractérisé en ce que** ledit noeud comprend au moins dispositif de commutation (10; 40; 50; 60) selon l'une quelconque des revendications 1 à 15, relié un ensemble de lignes d'entrée sur ses ports d'entrée (PE) et à un ensemble de lignes de sortie sur ses ports de sortie (PS).

17. Réseau selon la revendication 16, **caractérisé en ce que** le dispositif de commutation est relié en outre à au moins une passerelle (70).

18. Réseau selon la revendication 16 ou 17, **caractérisé en ce qu'**il gère des contentions par répartition dans le temps des paquets, notamment lorsque les paquets en contention ne peuvent faire l'objet d'une conversion de longueur d'onde en raison de ladite limitation de capacité de conversion de longueur d'onde, et par répartition spectrale et temporelle, notamment lorsque le paquet en contention peut faire l'objet d'une conversion de longueur d'onde.

19. Utilisation d'un dispositif de commutation (10) selon l'une quelconque des revendications 1 à 15 pour la commutation de flux dans un noeud de réseau de communication, avec gestion des contentions par répartition dans le temps des flux, notamment lorsque les flux en contention ne peuvent faire l'objet d'une conversion de longueur d'onde en raison de ladite limitation de capacité de conversion de longueur d'onde, et par répartition spectrale et temporelle, notamment lorsque le flux en contention peuvent faire l'objet d'une conversion de longueur d'onde.

20. Procédé de commutation de signaux optiques avec capacité de conversion de longueur d'onde de porteuse, comprenant un ensemble de ports d'entrée (PE1-PEn), un ensemble de ports de sortie (PS1-PSn) fonctionnellement reliés aux ports d'entrée de manière qu'un signal d'entrée présenté sur l'un des ports d'entrée puisse être aiguillé sélectivement vers au moins l'un des ports de sortie, des moyens (34) de conversion de longueur d'onde permettant de disposer d'une capacité de conversion de longueur d'onde de porteuse d'un signal en entrée vers au moins une autre longueur d'onde en sortie de port de sortie,
**caractérisé en ce que** l'on limite ladite capacité de conversion de longueur d'onde en utilisant au moins l'une des trois possibilités de limitation i) à iii) :
i) avec l'un au moins desdits ports de sortie (PS), aucune conversion de longueur ne peut intervenir pour l'émission d'un signal d'un port d'entrée ;
ii) avec l'un au moins desdits ports de sortie (PS), la conversion peut intervenir pour l'émission d'un signal d'un port d'entrée (PE), mais avec conversion de longueur d'onde porteuse possible seulement vers un nombre restreint de valeurs de longueur d'onde parmi le nombre L de valeurs de longueurs d'onde acceptées en entrée, ce nombre restreint étant supérieur à 0 et inférieur à L, et
iii) avec un nombre restreint seulement de ports de sortie (PS) inférieur au nombre total de ports de sortie du dispositif de commutation, la conversion peut intervenir pour faire émettre un signal d'un port d'entrée (PE) avec conversion de longueur d'onde possible vers toute valeur de longueur d'onde parmi le nombre L de valeurs de longueurs d'onde distinctes acceptées en entrée.

21. Procédé selon la revendication 20, **caractérisé en ce que** l'on limite ladite capacité de conversion de longueur d'onde de manière à ce que la conversion puisse intervenir pour faire émettre un signal d'un port d'entrée (PE1 à PEn) par tout port de sortie (PS1 à PSn), mais avec conversion de longueur d'onde porteuse possible, pour chacun des ports de sortie, seulement vers un nombre restreint x1 de valeurs de longueur d'onde parmi le nombre L de valeurs de longueurs d'onde distinctes acceptées en entrée, x1 étant supérieur à 0 et inférieur à L.

22. Procédé selon la revendication 20, **caractérisé en ce que** l'on limite ladite capacité de conversion de longueur d'onde de manière à ce que la conversion puisse intervenir pour faire émettre un signal d'un port d'entrée (PE1 à PEn) par seulement un nombre restreint x2 parmi le nombre n de ports de sortie (PS1 à PSx), x2 étant supérieur à 0 et inférieur au nombre de ports de sortie, mais avec conversion de longueur d'onde possible vers toute valeur de longueur d'onde parmi le nombre L de longueurs d'onde distinctes acceptées en entrée.

23. Procédé selon l'une quelconque des revendications 20 à 22, **caractérisé en ce qu'**il met en oeuvre un dispositif selon l'une quelconque des revendications 1 à 15.
